# EUROPÄISCHE PATENTSCHRIFT

(11) **EP 1 791 879 B1**
(45) Veröffentlichungstag und Bekanntmachung des Hinweises auf die Patenterteilung: **19.03.2008**
(21) Anmeldenummer: 05783911.0
(22) Anmeldetag: 06.09.2005
(51) Int. Cl.: C08G 12/38, B01J 2/04

(54) **SPRÜHKONDENSATIONSVERFAHREN FÜR DIE HARZHERSTELLUNG**
SPRAY CONDENSATION METHOD FOR THE PRODUCTION OF RESIN
PROCEDE DE CONDENSATION PAR PULVERISATION POUR LA PRODUCTION DE RESINES

(30) Priorität: 08.09.2004 DE 102004043479
(43) Veröffentlichungstag der Anmeldung: 06.06.2007
(73) Patentinhaber: BASF SE, 67056 Ludwigshafen (DE)
(72) Erfinder: BRODT, Gregor, 64646 Heppenheim (DE); EHRENSTEIN, Moritz, 67063 Ludwigshafen (DE); KRÜGER, Marco, 68161 Mannheim (DE); SEIDL, Volker, 68163 Mannheim (DE); WINTER, Dominik, 67061 Ludwigshafen (DE); KARIM, Asif, 22761 Hamburg (DE); MORITZ, Hans-Ulrich, 21227 Bendestorf (DE)
(74) Vertreter: Isenbruck, Günter
(86) Internationale Anmeldenummer: PCT/EP2005/009567
(87) Internationale Veröffentlichungsnummer: WO 2006/027210

(56) Entgegenhaltungen:
- DE-A1- 10 314 466
- DE-B- 1 034 358
- GB-A- 2 178 749
- US-A- 4 814 422

## Beschreibung

Die vorliegende Erfindung betrifft ein Sprühkondensationsverfahren zur Herstellung von getrockneten Harzen in Pulverform aus Melamin, Harnstoff oder deren Gemisch und mindestens einem Aldehyd mit einer bestimmten Morphologie.

Die Herstellung von getrockneten Harzen in Pulverform mittels eines Sprühkondensationsprozesses ist beschrieben in der nicht vorveröffentlichen prioritätsälteren DE 103 14466.8 - 43, wobei die Kondensation von mindestens einem flüssigen oder in einer Flüssigphase gelösten Ausgangsstoff mit mindestens einem Aldehyd in einem Sprühreaktor vorgenommen wird. Die erzeugten Harzpartikel liegen in der Regel als feste Partikel in trockener Pulverform oder als flüssiges oder als mit Restfeuchte beladenes festes Produkt vor.

Sprühpolymerisationsreaktionen, die eine Überlagerung des Prozesses einer Polymerisation mit einer Trocknung in einem Verfahrensschritt darstellen, sind seit Jahren bekannt. Hierbei wird eine breite Auswahl an Polymerisationsreaktionen genutzt (siehe z.B. WO 96/40427 und US 5,269,980). Erzeugt werden im Allgemeinen kugelförmige Polymerpartikel mit einer vorbestimmten und kontrollierbaren Partikelgröße und monodisperser oder polydisperser Verteilung.

In GB-B 949 968 wird ein Verfahren zur Herstellung von Schaumkleinstteilchen aus organischem polymeren Material beschrieben, wobei das Polymer oder dessen Ausgangsstoffe in einen heißen Gasstrom hoher Geschwindigkeit vorzugsweise nahe Schallgeschwindigkeit versprüht werden, dessen Temperatur hoch genug ist, um das Schäumen oder Expandieren des Polymeres bzw. die Bildung und gleichzeitige Schäumung des Polymers zu initialisieren. Die Schäumung kann zusätzlich durch Anwesenheit eines geeigneten Treibmittels oder durch Einwirkung von aus der stattfindenden chemischen Reaktion entstehenden Gasen und Dämpfen herbeigeführt werden. Der heiße Gasstrom wird beispielsweise von Gasturbinen erzeugt, um die Kunststoffaerosole herzustellen. Es wird auch erwähnt, dass Harnstoff-Formaldehydharze in einem solchen heißen Strom in einer geschäumten Form aushärten können. Die erzeugten Kleinstteilchen liegen als offene oder geschlossene Zellen vor, die sich vereinzelt zu Assoziationen zusammenlagern können und eine Dichte aufweisen, die mit derjenigen von Luft verglichen werden kann. Die extremen Prozessbedingungen hinsichtlich Temperatur und Gasgeschwindigkeit und die Ausgestaltung des Eintritts der Ausgangsstoffe, z.B. als Venturi-Düse, erlauben die rasche Expansion, um Einfluss auf Größe und Dichte der Teilchen zu nehmen, aber nicht gezielt die Morphologie zu kontrollieren.

Aufgabe der vorliegenden Erfindung ist es demnach, ein vereinfachtes Verfahren zur Herstellung von kondensierten Harzen in Pulverform bereitzustellen, welches es erlaubt, die Morphologie der Harzpartikel im erzeugten Harzpulver gezielt zu kontrollieren und zu steuern.

Die Lösung dieser Aufgabe geht aus von dem bekannten Verfahren der Sprühkondensation zur Herstellung von Harzen in Pulverform aus Melamin, Harnstoff oder deren Gemisch und mindestens einem Aldehyd. Das erfindungsgemäße Verfahren ist dann dadurch gekennzeichnet, dass während und/oder nach Durchführung der Sprühkondensation die Morphologie der erzeugten Harzpartikel in ihren Partikelparametern beeinflusst wird.

Die gezielte Beeinflussung erfolgt im Wesentlichen durch Variation von Prozessparametern, die dabei stofflicher Natur sind, z.B. pH-Wert, Konzentration und Molverhältnisse der Monomere, Feststoffgehalt in der Ausgangslösung sowie Art der Zusatzstoffe. Weitere Prozessparameter beziehen sich auf die Prozessführung, wie Temperatur und Verweilzeit, und auf die apparative Gestaltung zur Durchführung des Verfahrens.

Die kontrollierbaren und steuerbaren Partikelparameter sind einerseits die Gestalt der Harzpartikel. Diese können insbesondere als Vollkugel eines bestimmten Durchmessers, als aufgeschäumtes oder expandiertes Partikel mit oder ohne glatte Oberflächenabschnitte oder auch in Form eines oder mehrerer Partikel in einer gemeinsamen Schale vorliegen. Andererseits sind der Partikeldurchmesser und die Partikelgrößenverteilung, sowie die Porosität und somit die Dichte beeinflussbare Partikelparameter.

Das Erzeugen maßgeschneiderter Harzpartikel mittels einer Sprühkondensation reduziert durch die Verbindung der Grundoperationen einer Polykondensation mit einer Trocknung die notwendigen verfahrenstechnischen Schritte. Entweder in einem integrierten oder einem nachgeschalteten Verfahrenschritt oder durch eine Kombination beider Schritte kann die Morphologie der erzeugten Harzpartikel gezielt eingestellt werden. Die so einstellbare Morphologie erweitert das Einsatzgebiet der erzeugten Harzpartikel wesentlich und bietet durch die Vorhersagbarkeit der Produkteigenschaften einen wesentlichen Vorteil.

Darüber hinaus können insbesondere durch ein Einbringen bestimmter Wirk- oder Aktivstoffe in den Prozessablauf der Harzpartikelbildung diese in den entstehenden Harzpartikeln fein verteilt und fixiert werden, um so einen effizienten funktionellen Harzpartikel bereitzustellen. Darunter sind im Zusammenhang mit der Einführung keine solchen Stoffe zu verstehen, die in das Entstehen der Morphologie eingreifen. Zusätzlich verbleiben die während der Polykondensation entstehenden Stoffe in den Harzpartikeln fein verteilt und können bei einem Einsatz der getrockneten Harzpartikel entsprechende Wirkung, beispielsweise im Falle von Formaldehyd biozide Wirkung, zeigen.

Das Verfahren beinhaltet das Bereitstellen einer Ausgangslösung, welche wenigstens die Monomeren, d.h. in der Regel eine kondensierbare und vernetzbare Substanz mit einem Aldehyd in einem Lösemittel enthält. Als Ausgangsstoffe kommen an sich solche Verbindungen in Betracht, die mit Aldehyden und/oder Dialdehyden wie Glyoxal, besonders bevorzugt Formaldehyd, in einer Polykondensationsreaktion zu Harzen reagieren. Im erfindungsgemäßen Verfahren sind dies aber nur solche Ausgangsstoffe, die insbesondere zusammen mit Formaldehyd bei der Herstellung von Aminoplastharzen eingesetzt werden, also Melamin, Harnstoff und damit chemisch vergleichbare substituierte Harnstoffe oder Melamine, die hier auch unter den Begriff Melamin oder Harnstoff miterfasst sein sollen.

Melamin wird üblicherweise in fester Form eingesetzt. Der Harnstoff wird fest, geschmolzen oder in Form einer wässrigen Lösung eingesetzt. Der Formaldehyd wird bevorzugt in Form einer 30 bis 70 gew.-%igen wässrigen Lösung oder in Form von Paraformaldehyd eingesetzt. Es können alle bekannten Mischungsverhältnisse eingestellt werden. Insbesondere werden pro 1 mol Melamin 0,5 bis 6 mol Aldehyd, bevorzugt Formaldehyd, und pro 1 mol Harnstoff 0,3 bis 3 mol Aldehyd, bevorzugt Formaldehyd, verwendet. Es können gegebenenfalls pro 1 mol Melamin und/oder Harnstoff 0,01 bis 0,9 mol, bevorzugt 0,01 bis 0,5 mol, insbesondere 0,01 bis 0,3 mol einer der sonstigen Verbindungen eingesetzt werden, die fähig sind, mit Aldehyden in einer Polykondensationsreaktion zu reagieren.

Die Ausgangsstoffe selbst können gegebenenfalls bereits in einem Lösemittel vorliegen. Bevorzugt ist das Lösemittel Wasser.

Je nach Einsatzgebiet der erzeugten Harzpartikel können die Reaktion gegebenenfalls unmittelbar beeinflussende Hilfs- und Zusatzstoffe eingesetzt werden, wie
- ein- oder mehrwertige Alkohole, z.B. Methanol, Ethanol, 1-Propanol, 2-Propanol, 1-Butanol, 2-Butanol, tert-Butanol, Ethylenglykol, Diethylenglykol, Triethylenglykol, Polyethylenglykole, Butandiole, Pentandiole, Hexandiole, Trimethylolpropan, Neopentylglycol und Sorbitol
- Aminoalkohole, z.B. Ethanolamin, Diethanolamin und Triethanolamin.

Die Reaktion wird vorzugsweise in Apparaten durchgeführt, die auch für die Sprühtrocknung geeignet sind. Derartige Reaktoren werden beispielsweise in K. Masters, Spray Drying Handbook, 5th Edition, Longman, 1991, S. 23 bis 66, beschrieben.

Die Herstellung einer reaktionsfähigen Mischung aus den Ausgangsstoffen kann in einem separaten Reaktor, in einer Mischstrecke vor dem Versprühen oder auch direkt im Sprühreaktor erfolgen.

Abhängig von den Ausgangsstoffen kann die Vermischung bei unterschiedlichen pH-Werten erfolgen. Für die Melamin-Formaldehyd-Kondensation ist ein pH-Wert von 6,5 bis 12 bevorzugt, während für die Harnstoff-Formaldehyd-Kondensation ein pH-Wert von 1 bis 7,5 vorteilhaft ist; wobei im letzteren Fall die Geschwindigkeit der Kondensationsreaktion zu niedrigeren pH-Werten hin in der Regel zunimmt.

Um eine verfrühte Kondensation vor dem Versprühen zu verhindern, kann es notwendig sein, die reaktionsfähige Mischung sowohl bei der Vermischung als auch in den Zuleitungen sowie die Düsen bzw. Zerstäuberscheiben selbst zu kühlen. Bevorzugte Temperaturen liegen bei - 40°C bis 30°C. Ebenfalls kann es notwendig sein, den Zulauf durch einen höheren Förderdruck in den Leitungen zu erhöhen. Wird die Kondensation durch Additive und/oder Katalysatoren eingeleitet, können diese erst kurz vor dem Sprühreaktor zugegeben werden. Zur Vermeidung von Verstopfungen in der Förder- und Mischstrecke oder in-der Zerstäubungseinheit kann es sinnvoll sein, die reaktionsfähige-Mischung in situ im Sprühreaktor zu erzeugen, in dem zwei oder mehrere Reaktionspartner ineinandergesprüht werden.

Die flüssige reaktionsfähige Mischung wird in einem Reaktor zerstäubt. Als Reaktor wird einer der bekannten Sprühreaktoren, bevorzugt ein Sprühturm, verwendet; beispielsweise mit einer Höhe von 8 bis 30 Metern, bevorzugt 10 bis 20 Metern und einem Durchmesser typischerweise von 2 bis 10 Metern, bevorzugt von 4 bis 7 Metern. Der Sprühreaktor kann aus mehreren Abschnitten bestehen. Bevorzugt befindet sich die Zerstäubungseinheit in einem oberen Abschnitt, welcher zylindrisch gestaltet ist, während der untere Abschnitt gegebenenfalls konisch ausgeführt ist.

Das Versprühen kann mittels einer oder mehrerer Düsen oder mittels Zerstäuberscheiben erfolgen. Die Zerstäubungseinheit mit den Düsen befindet sich üblicherweise im oberen Abschnitt des Reaktors. Die Düsenöffnungen haben typischerweise einen Durchmesser von 1 µm bis 10 mm, vorzugsweise von 500 µm bis 3 mm. Im Allgemeinen sind mehrere Düsen symmetrisch angeordnet und gleichmäßig über den Querschnitt des Reaktorraumes verteilt. Bevorzugt sind sie ringförmig angeordnet und werden über eine gemeinsame Ringleitung mit der reaktionsfähigen Mischung versorgt. Im großtechnischen Einsatz sind üblicherweise 5 bis 50 Düsen pro Ringleitung vorgesehen, häufig 10 bis 30. Es werden bis zu 20 solcher Düsenringe verwendet. Bevorzugt überlappen sich die Sprühkegel der Düsen, so dass das gesamte Volumen des Sprühreaktors homogen mit Sprühtröpfchen beaufschlagt ist. Geeignet sind alle dem Fachmann bekannte Düsen. Bevorzugt werden Vollkegeldüsen mit einem Sprühkegel in einem Bereich von 60° bis 180°, bevorzugt 90° bis 120°. Der Durchsatz pro Düse beträgt typischerweise bis zu 1500 kg/h, bevorzugt 100 bis 500 kg/h. Der Druck vor dem Versprühen kann in einem weiten Bereich eingestellt werden. Das Versprühen kann bei Atmosphärendruck oder auch bei einem Überdruck von beispielsweise 60 bis 100 bar erfolgen.

Eine Vertropfung durch laminaren Strahlzerfall, wie in Rev. Sci. Instr. Band 38 (1966), S. 502 bis 506, beschrieben, ist ebenfalls möglich. Bei der Tröpfchenerzeugung durch Vibrationsvertropfung beträgt der Tröpfchendurchmesser ungefähr das 1,9fache des Düsendurchmessers.

Das Versprühen oder Vertropfen der Ausgangslösung erzeugt Tropfen mit einer kontrollierbaren Größe. Die Tröpfchen haben typischerweise einen Durchmesser von 1 µm bis 2 mm, bevorzugt von 5 µm bis 1 mm. Die Tröpfchengröße ist über den Durchmesser der Düsenöffnung oder mittels des Durchmessers der Löcher der Zerstäuberscheiben sowie den Betriebsparametern der Zerstäubungseinheit einstellbar. Ferner ist die Größe der Tröpfchen von dem Druck der reaktionsfähigen Mischung abhängig.

Die reaktionsfähigen Ausgangsstoffe kondensieren d.h. reagieren innerhalb der Tropfen miteinander in einer entsprechenden Reaktionsatmosphäre. Die Reaktionsatmosphäre und die Verweilzeit der Tropfen werden den jeweiligen Kondensationsbedingungen und dem gewünschten Endprodukt angepasst. Die Verweilzeit muss lang genug sein, um einen gewünschten Grad der Kondensation zu erreichen. Die Geschwindigkeit der Reaktion liegt in der Größenordnung der Geschwindigkeit des Verdampfungsvorganges und der Verweilzeit im Reaktor.

Die Verweilzeit bestimmt sich unter anderem durch die im Reaktor herrschenden Strömungsbedingungen. So kann die zerstäubte Reaktionsmischung mit oder ohne Gasströmung nach unten fallen. Durch entsprechende verfahrenstechnische Gestaltung, z.B. durch einen Gegenstrom des eingesetzten Treib- oder Begleitgases, kann die Fallgeschwindigkeit reduziert werden, die Strömungsrichtung umgekehrt werden oder wenn erforderlich die Tropfen in Schwebe gehalten werden. Somit ist die Verweilzeit beliebig einstellbar. Vorzugsweise strömt das Gas in Fallrichtung. Die Gasgeschwindigkeit ist so eingestellt, dass die Strömung im Reaktor gerichtet ist, so dass keine der allgemeinen Strömungsrichtung entgegen gesetzten Konvektionswirbel auftreten. Es werden Verweilzeiten von 5 bis 150 Sekunden, bevorzugt von 30 bis 120 Sekunden eingestellt.

Das Treibgas oder Begleitgas führt Lösemittel und nicht-kondensierte Ausgangsstoffe ab. Verwendet werden können Luft oder andere inerte Gase oder Gase, die die Reaktion katalytisch beeinflussen (wie Kohlen- oder Schwefeldioxid oder Rauchgas), oder Mischungen der genannten Gase. Bevorzugt wird trockene Luft erhitzt auf eine Temperatur von 100°C bis 200°C, bevorzugt 140°C bis 180°C. Dem aus dem Reaktor austretenden Gas kann die Reaktionswärme entzogen werden und die dabei abgetrennten flüssigen Anteile bestehend aus Lösemittel und Ausgangsstoffen kann der reaktionsfähigen Mischung erneut zugeführt werden.

Bevorzugt liegt der Absolutdruck im Reaktor zwischen 0,001 und 20 bar, insbesondere 0,1 und 10 bar. Üblicherweise wird bei Atmosphärendruck kondensiert. Die Temperatur im Reaktor liegt bevorzugt zwischen 0°C und 300°C, insbesondere zwischen 20°C und 200°C. Die Reaktoren können zusätzlich beheizt werden, um eine Kondensation an der Reaktorwand zu vermeiden. Die Wandtemperatur liegt um mindestens 5°C über der Reaktorinnentemperatur.

Die Temperatur während der Sprühkondensation ist üblicherweise konstant. Bei einigen Anwendungsfällen kann es sinnvoll sein, dass ein Temperaturprofil innerhalb des Reaktors herrscht.

In der Regel ist das Produkt einer Sprühkondensation ein fester kugelförmiger Partikel, welcher aus der Gasphase abgeschieden werden kann. Das Reaktionsprodukt kann dem Reaktor in üblicher Weise entnommen werden, vorzugsweise am Boden über eine Förderschnecke oder durch einen Zyklon oder Filter aus dem Gasstrom abgeschieden werden. Anschließend kann das angefallene Pulver mittels Schaufeleinheiten oder Förderschnecken ausgetragen werden. Die erzielten Durchmesser der Harzpartikel liegen typischerweise zwischen 1 µm bis 2 mm, bevorzugt zwischen 5 µm und 1 mm, besonders bevorzugt zwischen 30 µm und 500 µm.

Um eine gewünschte Morphologie der Harzpartikel einzustellen, müssen Bedingungen (Maßnahmen) geschaffen werden, die zu einer Umwandlung innerhalb des Harzpartikels führen, welches während des Polykondensationsprozesses sonst ausgehend von einem Tropfen im Allgemeinen zu einer Vollkugel aushärten würde.

Initiiert wird die Morphologieumwandlung durch eine entsprechende Prozessführung insbesondere eine Temperaturführung während der Sprühkondensation im Sprühreaktor, durch eine gezielte thermische Nachbehandlung in einem weiteren Verfahrensschritt und/oder durch die Beigabe von Zusatzstoffen in der oder den Ausgangslösungen. Bevorzugte Zusatzstoffe sind Treibmittel, beispielsweise organische Lösemittel oder thermisch zersetzbare Verbindungen, welche unter den herrschenden Reaktionsbedingungen gasförmige Zersetzungsprodukte erzeugen, die zu einem Expandieren der Harzpartikel führen. Weitere bevorzugte Zusatzstoffe sind grenzflächenaktive Stoffe (Tenside), welche die entstehende Schaumstruktur gezielt beeinflussen können. Bevorzugt ist eine thermische Nachbehandlung in einem separaten Prozess, insbesondere in einer Trocknungsstufe.

Bevorzugt wird ein Harzpartikel mit einem gewissen Anteil an Restfeuchte bzw. nicht umgesetzten Edukt bzw. nicht vollständig verdampften Lösemittel am Ausgang des Sprühreaktors in einen nachgeschalteten Apparat überführt, in welchem die gewünschte physikalische oder chemische Modifizierung des Produktes erfolgt. Die absolute Restfeuchte im erzeugten Harzpartikel liegt vor der Morphologieumwandlung insbesondere in einem Bereich von 0 bis 30 % und die Restreaktivität zwischen 0 bis 80 % des Ausgangswertes. Unter Restreaktivität soll hier die beispielsweise mittels DSC (Differential Scanning Calorimetry) messbare spezifische Reaktionswärme der Harzpartikel bezüglich der spezifischen Reaktionswärme der Ausgangslösung verstanden werden.

Die Modifizierung des Produkts wird in einem zur thermischen Trocknung geeigneten Apparat durchgeführt, welcher unterschiedliche, dem Fachmann bekannte Bauformen aufweisen kann. Geeignete Verfahrensvarianten sind eine Verdunstungs-, Kontakt- oder Strahlungstrocknung oder eine Hochfrequenztrocknung. Bevorzugt erfolgt die thermische Nachbehandlung, in dem die Harzpartikel einer Temperatur typischerweise zwischen 100 und 200°C ausgesetzt sind. Die Nachbehandlung erfolgt abhängig vom Energieeintrag und der angestrebten Schaumstruktur bei einer Verweilzeit von 1 Sekunde bis zu 1 Stunde. Einstellbare Morphologien der Harzpartikel sind eine Vollkugel oder ein Partikel mit einer geschlossenen Mantelfläche, beispielsweise eine Schale, deren Dicke 1 % bis 20 % des Partikeldurchmessers beträgt, mit einem Partikeldurchmesser insbesondere zwischen 30 µm und 500 µm. Bevorzugt wird ein aufgeschäumter Harzpartikel mit oder ohne glatte Oberflächenabschnitte, wobei sich die glatten Oberflächenabschnitte weitgehend über die gesamte Oberfläche ausbreiten können oder nur einen kleinen Oberflächenteil ausmachen. Fehlen glatte Oberflächenabschnitte, so liegt ein durchgängig poröser Partikel vor, der nahezu eine Kugelform oder eine andere Gestalt haben kann. Eine weitere einstellbare Morphologie ist eine Schale mit einem Durchmesser von 30 µm bis 500 µm, an der sich weitere kleinere Harzpartikel in einer Größenordnung von 10 µm bis 50 µm angelagert haben. Die aufgeschäumten Harzpartikel können geschlossenzellige und/oder offenzellige Schaumstrukturen (z.B. Stegschäume) aufweisen, deren räumliche Strukturen (z.B. Poren, Zellen, Steglängen) typischerweise Abmessungen zwischen 0,1 µm und 200 µm aufweisen.

Im ersten Prozessschritt der Sprühkondensation bildet sich abhängig vom Säuregehalt der reaktionsfähigen Mischung und den Prozessbedingungen eine unterschiedlich dicke Schale, die einen Kern bestimmter Restfeuchte und Restreaktivität umschließt. In einem weiteren Trocknungsschritt schäumen und expandieren die Partikel abhängig vom Säuregehalt auf. Bei geringem Säuregehalt tritt keine Veränderung der Vollkugel ein. Erst mit steigendem Säuregehalt beginnen die Harzpartikel aufzuschäumen, wobei die glatte Oberfläche aufplatzt und es bis zu einem vollständigen Abplatzen und Freilegen eines porösen Hohlkörpers kommen kann.

Tiefe Temperaturen, z.B. von 0 bis -100°C während eines Nachbehandlungsschrittes bewirken ein Abplatzen der die Partikel umgebenden glatten Oberflächenschale, so dass ein poröser Hohlkörper freigelegt wird.

Die Harzpartikel können mit dem Fachmann bekannten Verfahren (im Sprühreaktor integriert oder als nachgeschaltete Einheit) zu Partikelagglomeraten weiterverarbeitet werden.

Maßgeschneiderte Harzpartikel finden eine breite Anwendung. Bevorzugt werden pulverförmige Harze als organische Pigmente verwendet. Aber erst das kontrollierbare Aufschäumen der Harzpartikel führt zu einer verstärkten Pigmentwirkung aufgrund der höheren Lichtbrechung in den Poren.

Ferner können die erfindungsgemäßen Melamin- oder Harnstoffharze oder deren Gemisch als Füllstoff für sehr leichte Spritzguss- oder Extrusionsmaterialien durch kontrolliertes Aufschäumen und die damit erzielte Dichtereduktion verwendet werden. Durch die Brechungsindexdifferenz in den Poren des aufgeschäumten Harzpartikels zu dem umgebenden Matrixpolymer (beispielsweise Polystyrol oder Polyacrylate) wirken die Füllstoffe gleichzeitig als Pigment.

Wirkstoffe, die Bestandteile der Ausgangslösungen sind, werden während des Kondensationsprozesses in die entstehende Harzmatrix fein verteilt eingebaut und fixiert. So entstehen je nach Charakter der Wirkstoffe funktionelle Füllstoffe oder Beschichtungsstoffe, welche beispielsweise Anwendung in der Papierherstellung als Füllstoff, Retention oder Pigment (z.B. Weißpigment mit UV-Aufheller) finden.

Die der Ausgangslösung zugegebenen Wirkstoffe können später durch Diffusion oder Zerbrechen der Harzpartikel freigesetzt werden. Die in den Hohlräumen und Poren vorhandenen Gase, welche aus dem Kondensationsprozess resultieren, entfalten beispielsweise im Falle von Formaldehyd eine biozide Wirkung.

Geschäumte Harzpartikel eignen sich als Isolierstoff, beispielsweise zur Wärmeisolation.

Als vorteilhaft gestaltet sich die kontrollierte Morphologieumwandlung mittels einer Nachbehandlung, wenn diese erst an dem Ort der Weiterverarbeitung der Harzpartikel erfolgt, beispielsweise beim Einbringen der Harze in Spritzguss- oder Extrusionsmaterialien als Füllstoff.

Die Harzpartikel, bevorzugt die aufgeschäumten Harzpartikel können vorteilhaft als Reinigungsmittel eingesetzt werden. Die Anwendung kann in Form eines Pulvers, eines Granulats, einer Suspension, als Beschichtung eines Formkörpers oder eingebettet in eine Matrix erfolgen.

## Patentansprüche

1. Verfahren der Sprühkondensation zur Herstellung von getrockneten Harzen in Pulverform aus Melamin, Harnstoff oder deren Gemisch und mindestens einem Aldehyd, **dadurch gekennzeichnet, dass** die Durchführung der Sprühkondensation durch Vertropfung erfolgt und dadurch die Morphologie der erzeugten Harzpartikel im erzeugten Pulver gezielt in ihren Partikelparametern beeinflusst wird, indem ein geschaumter; vorwiegend kugelförmige Partikel mit oder ohne glatte Oberflächenabschnitte erzeugt wird.

2. Verfahren nach Anspruch 1, **dadurch gekennzeichnet, dass** die Vertropfung eine Vibrationsvertropfung ist.

3. Verfahren nach Anspruch 1 oder 2, **dadurch gekennzeichnet, dass** das Einstellen des pH-Werts in der Ausgangslösung der Komponenten vor der Sprühkondensation die Morphologie der erzeugten Harzpartikel gezielt in ihren Partikelparametern beeinflusst.

4. Verfahren nach einem der Ansprüche 1 bis 3, **dadurch gekennzeichnet, dass** der Ausgangslösung der Komponenten vor Beginn der Sprühkondensation Aktiv- und/oder Wirkstoffe zugesetzt werden.

5. Verfahren nach einem der Ansprüche1 bis 3, **dadurch gekennzeichnet, dass** Zusatzstoffe der Ausgangslösung der Komponenten vor Beginn der Sprühkondensation zugesetzt werden, die Gase oder Dämpfe während und/oder nach Durchführung der Sprühkondensation bilden oder die als grenzflächenaktive Substanzen die entstehende Schaumstruktur beeinflussen.

6. Verfahren nach einem der Ansprüche 1 bis 5, **dadurch gekennzeichnet, dass** durch ein Temperaturprofil während und/oder nach Durchführung der Sprühkondensation die Morphologie der erzeugten Harzpartikel gezielt in ihren Partikelparametern beeinflusst wird.

7. Verfahren nach einem der Ansprüche 1 bis 6, **dadurch gekennzeichnet, dass** die erzeugten Harzpartikel einer der Sprühkondensation nachgeschalteten Trocknungsstufe unterworfen werden.

8. Harzpartikel erhältlich nach einem Verfahren gemäß den Ansprüche 1 bis 7.

9. Verwendung der Harzpartikel nach Anspruch 8 als organische Pigmente, Füllstoffe oder als Reinigungsmittel.

10. Verwendung der Harzpartikel nach Anspruch 8 als Träger von Aktiv- oder Wirkstoffen.

## Claims

1. A spray condensation process for the preparation of dried resins in powder form from melamine, urea or a mixture thereof and at least one aldehyde, wherein the spray condensation is carried out by dropletization and, as a result, the morphology of the resin particles produced is influenced in a targeted manner with respect to their particle parameters in the powder produced by a foamed, predominantly spherical particle with or without smooth surface sections being produced.

2. The process acording to claim 1, wherein the dropletization is a vibration dropletization.

3. The process according to claim 1 or 2, wherein the adjustment of the pH in the starting solution of the components before the spray condensation influences in a targeted manner the morphology of the resin particles produced With respect to their particle parameters.

4. The process according to any of claims 1 to 3, wherein active substances are added to the starting solution of the components before the beginning of the spray condensation.

5. The process according to any of claims 1 to 3, wherein additives which form gases or vapors during the spray condensation or after the latter has been carried out or which, as surface-active substances, influence the resulting foam structure are added to the starting solution of the components before the beginning of the spray condensation.

6. The process according to any of claims 1 to 5, wherein the morphology of the resin particles produced is influenced in a targeted manner with respect to their particle parameters by a temperature profile during the spray condensation or after the latter has been carried out.

7. The process according to any of claims 1 to 6, wherein the resin particles produced are subjected to a drying stage downstream of the spray condensation.

8. A resin particle obtainable by a process according to any of claims 1 to 7.

9. The use of the resin particles according to claim 8 as organic pigments, fillers or cleaning agents.

10. The use of the resin particles according to claim 8 as carriers of active substances.

## Revendications

1. Procédé de grelonage en vue de préparer des résines séchées sous forme de poudre à partir de mélamine, d'urée ou de leur mélange et au moins d'un aldéhyde, **caractérisé en ce que** la mise en oeuvre du grelonage a lieu grâce à une formation de gouttelettes et **en ce que** la morphologie des particules de résine produites dans la poudre produite est influencée de manière ciblée en ce qui concerne ses paramètres de particule, une particule expansée, principalement sphérique, avec ou sans parties superficielles lisses, étant produite.

2. Procédé selon la revendication 1, **caractérisé en ce que** la formation de gouttelettes est une formation de gouttelettes par vibration.

3. Procédé selon la revendication 1 ou 2, **caractérisé en ce que** l'ajustement de la valeur de pH dans la solution initiale des composants avant le grelonage influence la morphologie des particules de résine produites de manière ciblée en ce qui concerne ses paramètres de particule.

4. Procédé selon l'une quelconque des revendications 1 à 3, **caractérisé en ce que** des substances actives et/ou des agents chimiques sont ajouté(e)s à la solution initiale des composants avant le début du grelonage.

5. Procédé selon l'une quelconque des revendications 1 à 3, **caractérisé en ce que** des additifs sont ajoutés à la solution initiale des composants avant le début du grelonage, qui forment des gaz ou des vapeurs pendant et/ou après la mise en oeuvre du grelonage ou qui, en tant que substances tensioactives, influencent la structure de mousse résultante.

6. Procédé selon l'une quelconque des revendications 1 à 5, **caractérisé en ce que** la morphologie des particules de résine produites est influencée de manière ciblée en ce qui concerne ses paramètres de particule grâce à un profil de température pendant et/ou après la mise en oeuvre du grelonage.

7. Procédé selon l'une quelconque des revendications 1 à 6, **caractérisé en ce que** les particules de résine produites sont soumises à une étape de séchage placée après le grelonage.

8. Particules de résine que l'on peut obtenir par un procédé selon l'une quelconque des revendications 1 à 7.

9. Utilisation des particules de résine selon la revendication 8 en tant que pigments organiques, matières de charge ou en tant que détergents.

10. Utilisation des particules de résine selon la revendication 8 en tant que supports pour des substances actives ou des agents chimiques.
